# EUROPEAN PATENT SPECIFICATION

(11) **EP 0 467 600 B1**
(45) Date of publication and mention of the grant of the patent: **30.08.1995**
(21) Application number: 91306315.2
(22) Date of filing: 11.07.1991
(51) Int. Cl.: H04Q 7/20, H04B 7/26

(54) **Radio link architecture for wireless communication systems**
Funkverbindungsarchitektur für drahtlose Kommunikationssysteme
Architecture de liaison radio pour système de communication sans fil

(30) Priority: 17.07.1990 CA 2021382
(43) Date of publication of application: 22.01.1992
(73) Proprietor: NORTHERN TELECOM LIMITED, Montreal, Quebec H2Y 3Y4 (CA)
(72) Inventor: Strawczynski, Leo, Ottawa, Ontaorio K2A 2J5 (CA); Sandler, Howard M., W. Ottawa, Ontario K2P 2G2 (CA); Plett, Gregory L., Ontario K0A 2T0 (CA); Steer, David G., Nepean, Ontario K2H 8E8 (CA)
(74) Representative: Ryan, John Peter William

(56) References cited:
- EP-A- 0 111 972
- EP-A- 0 268 375
- EP-A- 0 283 683
- EP-A- 0 324 363

## Description

This invention relates to digital wireless communication systems, but more particularly to low-power wireless communication systems such as those using cellular channel re-use.

Low-power wireless communication systems offer users the convenience of mobility and personal services, as well as significant cost savings in the installation and relocation of telecommunication equipment. Second generation cordless telephones using digital technology offer the promise of improved performance, communication of both voice and data services, a range of security options and enhanced convenience features when compared to their analogue predecessors. Such telephones can be used in the workplace, the residence and in public areas.

The concepts and designs of this system are guided by the following objectives:
- comprehensive usage of a personal shirt-pocket terminal across residential, office and public environments;
- affordability, i.e. economical implementation down to residential and small business applications;
- efficient spectrum utilization capable of supporting a complement of voice and data services at a quality comparable to wireline systems;
- portability, i.e. amenable to miniaturization and low power consumption; and
- no compromise to network performance and integrity.

Present European standards do not meet all of these objectives. The radio link architecture defined by the UK CT2 standard was conceived for residential services, and lacks the flexibility and capacity for intensive business applications.

The radio link architecture of the DECT (Digital European Cordless Telephony) standard has been optimized for business applications at the expense of residential services. For example, it is optimized to support large traffic densities. In addition, it introduces excessive delay which requires echo control.

EP - A - 0 283 683 discloses a radio link architecture for a wireless communication system having a plurality of RF carriers for communicating between base stations and a number of subscriber terminals. This document further discloses that a first group of said RF carriers are allocated as traffic channels between said base stations and said subscriber terminals, and that a second group of said RF carriers are allocated for providing common signalling channels in a carrier sense multiple access mode between said base stations and said subscriber terminals. As disclosed in this document each base station performs management of radio channels based on shared information. There is only one signalling channel which is shared by all base stations. When a call set-up is attempted the subscriber station will be heard over this signalling channel by all the base stations. The base stations with the strongest signal will establish communication with the subscriber station.

There is accordingly a need for an improved radio link architecture which eliminates the problems of existing systems while providing economical implementations in the workplace, the residence and in public areas.

Accordingly, it is an object of the present invention to provide an improved radio link architecture which can provide higher capacity and improved performance.

Another object of the present invention is to provide an improved radio link architecture which can provide value-added features such as on-hook signalling, messaging, roaming, etc. without tying up traffic channels.

Another object of the present invention is to provide an improved radio link architecture which can provide a faster response time when setting up a call or checking for an incoming call.

Yet another object of the present invention is to provide an improved radio link architecture which can provide increased stand-by battery life to the portable handset.

According to one aspect of the present invention, there is provided a method of operating a wireless communication system having at least two base stations , each operating in a separate cell and each communicating with a plurality of subscriber terminals over a plurality of RF carriers, characterised in that the method comprises:
allocating a first group of said plurality of RF carriers for use as traffic channels between a base station and subscriber terminal, each RF carrier in said first group operating on a separate frequency, each RF carrier being comprised of one full-duplex traffic channel operating within a common time frame T comprised of z full-duplex time slots operating throughout the time frame T;
allocating a second group of said plurality of RF carriers for use as common signalling channels, each RF carrier in said second group being comprised of n full-duplex common signalling channels operating in time division multiple access mode within said common time frame T, each full-duplex common signalling channel operating in a sub-frame of time T/n, each sub-frame being comprised of z/n full-duplex time slots, wherein z, n and z/n are whole numbers with z greater than or equal to n;
assigning a first one of said common signalling channels to a first base station and a second one of said common signalling channels to a second base station such that subscriber terminals located in the cell of the first and second base stations can register and set-up calls using the first and second common signalling channels, respectively;
exchanging signalling signals between the first base station and subscriber terminals within the cell of the first base station via the first assigned one of the common signalling channels; and
exchanging signalling signals between the second base station and subscriber terminals within the cell of the second base station via the second assigned one of the common signalling channels,such that registration and call set-up can be performed.

According to another aspect of the present invention there is provided a wireless communication system having a number of base stations each operating in separate cells and each communicating with a plurality of subscriber terminals over a plurality of RF carriers, characterised in that a base station communicates with subscriber terminals located in its cell over a first group of RF carriers allocated for use as traffic channels, each RF carrier in said first group operating on a separate frequency, each carrier being comprised of one full-duplex traffic channel operating within a common time frame T comprised of z full-duplex time slots operating over the entire frame and the base station registers and sets-up calls with a subscriber terminal in its cell using a common signalling channel selected from a second group of said plurality of RF carriers allocated for use as common signalling channels, each RF carrier in said second group being comprised of n full-duplex common signalling channels operating in time division multiple access mode within said common time frame T, each full-duplex common signalling channel operating in a sub-frame of time T/n, each sub-frame being comprised of z/n full-duplex time slots, wherein z, n and z/n are whole numbers with z greater than or equal to n.

The radio link architecture of the present invention is thus characterised by the use of separate traffic and signalling channels on a number of RF carriers, thereby providing common signalling channels for call set-up and control functions. Several common signalling channels when multiplexed together occupy the equivalent time/bandwidth of one traffic channel. This therefore is more efficient than each common signalling channel occupying the equivalent time bandwidth of one traffic channel. Each traffic channel may contain a bearer channel for user voice and/or data and an associated signalling channel which is distinct from the common signalling channels.

Embodiments of the invention will now be described with reference to the accompanying drawings, in which:
Figure 1 is an illustration of a typical wireless type communication system;
Figure 2 is an illustration of the frequency plan for the CT2 standard;
Figure 3a is an illustration of a frequency plan for an embodiment of the improved radio link of the present invention; and
Figure 3b is an illustration of the signalling channel format for the frequency plan described in Figure 3a.

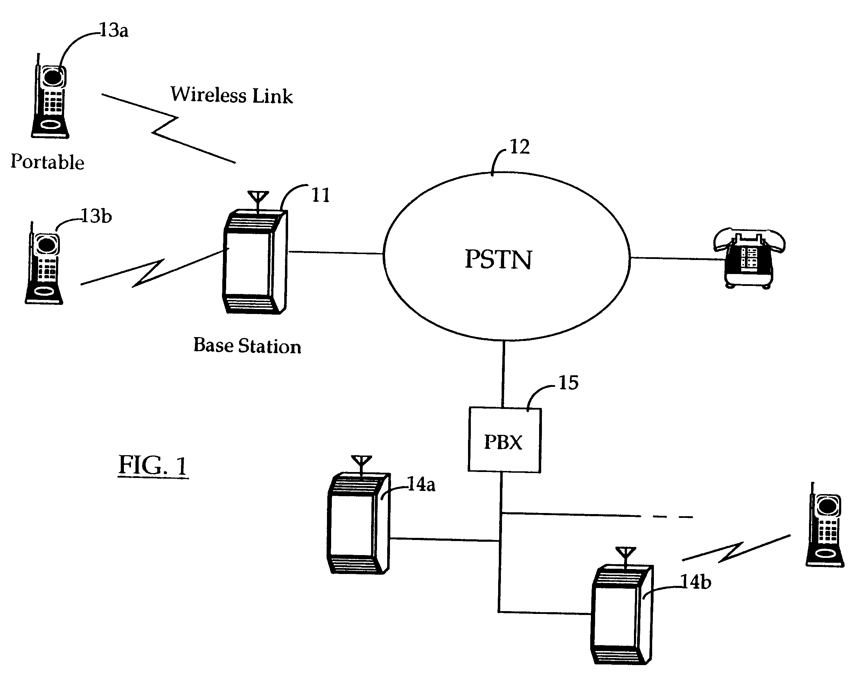

In the illustration of Figure 1, a wireless type communication system is shown. The concept of wireless or cordless telephones has evolved to provide users with a small, light pocket handset with which calls can be made at home, at the workplace or near a public access point. For example, in the UK, the CT2 standard provides second generation cordless telephony. With CT2, digital transmission is used between the handset and the base station. This means that the speech has uniform clarity in its operational range. Each handset and base station has a unique identification code transmitted over the wireless link thereby providing a unique communication link to the user. The network can consist of small base stations (11), which consist of radio transmitters and receivers. These are deployed in offices, residences and public areas, such as airports, gas stations and shopping malls. The base stations (11) are linked to the public switched telephone network (PSTN) (12) and form the interface with a number of subscriber terminals such as portable handsets (13a). (13b), etc. Several base stations, (14a), (14b), etc., can be linked to a host, such as a PBX (15) to provide coverage of larger areas in say, a private business or office building. Such a wireless system is disclosed in US patent 4, 771, 448.

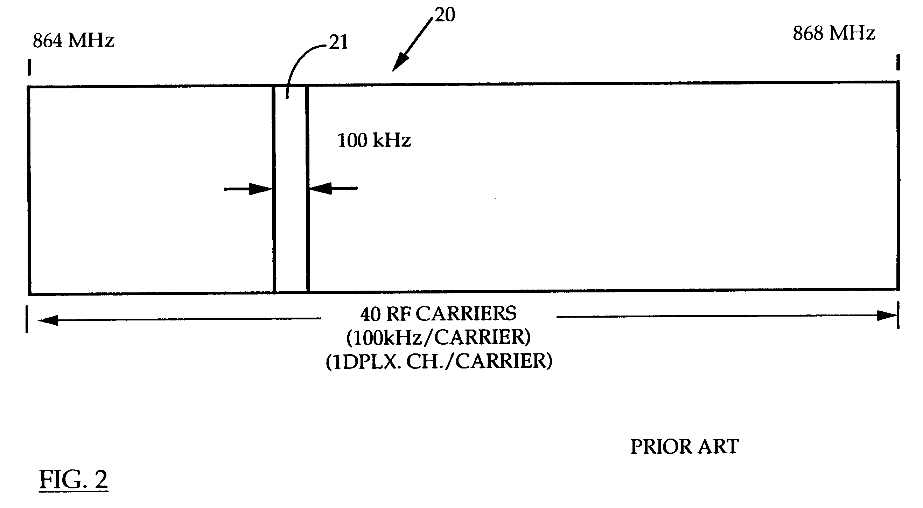

In Figure 2, there is shown the radio link architecture for the current UK CT2 standard. This standard calls for an operating spectrum of 864-868 MHz, i.e. a 4 MHz bandwidth as shown at reference numeral (20). Within this bandwidth, are provided 40 RF carriers. Each carrier (21) is used as one channel with a bandwidth of 100 kHz per channel, i.e. in a Frequency Division Multiple Access (FDMA) mode, with time-division duplex operation. That is, one time slot in each frequency is used for communication from the base station to a portable handset and the adjacent time slot in the same frequency is used for communication between the portable handset and the base station. This technique is commonly referred to as "ping-pong".

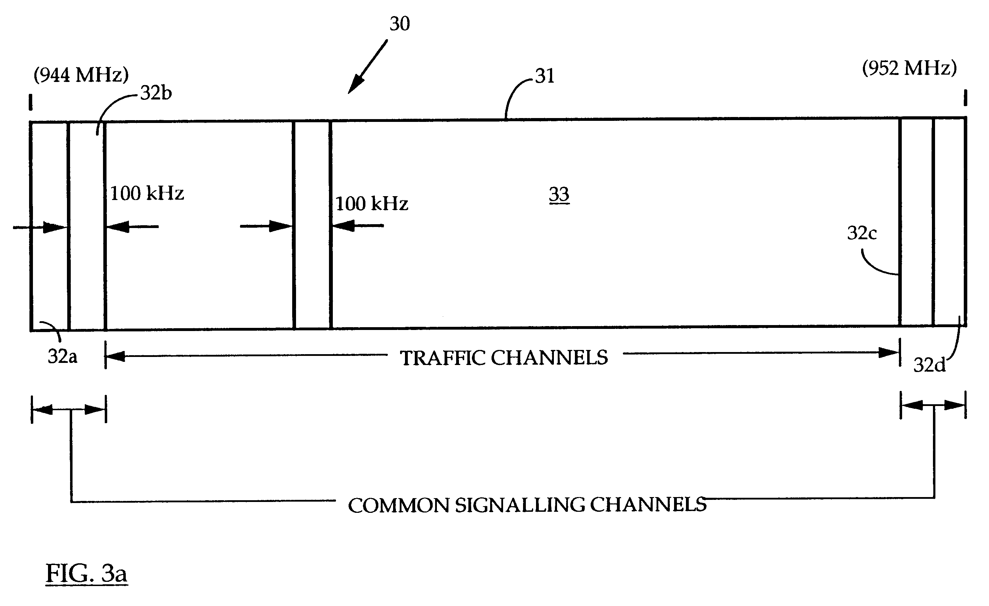

Figure 3a illustrates an embodiment of the improved radio link architecture of the present invention. As illustrated, the radio link consist of a number of RF carriers (30) operating as above, in an FDMA mode. As an example, assuming that the operating bandwidth (31) is 8 MHz, within the frequencies of 944 MHz and 952 MHz, 80 RF carriers of 100 kHz per carrier could be used. However, in the embodiment of the present invention, a number of RF carriers are used or allocated for providing common signalling channels. For example, if four carriers (32a), (32b), (32c) and (32d) i.e. 5% of the capacity, were reserved for common signalling channels, then, 76 RF carriers (33) would be available as traffic channels for normal voice and data communication between handsets and a number of base stations. As shown, each traffic type RF carrier (33) and each RF carrier (32a-d) used for common signalling channels would have a bandwidth of 100 kHz. In this particular embodiment, the first two and the last two RF carriers are used to carry signalling channels. That is, channels 1, 2 79 and 80. Although these are the preferred positions for the signalling channels, other positions can be used within the spectrum. The common signalling channels in each reserved RF carrier are used for registration of portable handsets within a cell, call set-up to the base station with the strongest signal, thereby extending capacity and performance, faster call set-up, decreased scan-time requirement at the portable handsets, thereby extending standby battery life. An example, of usage during call set-up is the identification and instruction as to what traffic channels to switch to in prioritized order. However, the bulk of the call set-up messaging, e.g. authentication, can be done once the traffic channel has been selected and the base handset have switched to that traffic channel. The signalling channels can be used for broadcast type services from the base station. In addition, they can provide added features with fast response time, e.g. on-hook signalling. The signalling channels allow for faster response time when setting up a call or checking for an incoming call since there is no need to scan all traffic channels. This extends standby battery life since the handset can remain in a sleep mode for a longer time period. The base stations can have either pre-assigned common signalling channels or obtain one or more from dynamic assignment, either in a decentralized dynamic manner or by a common controller of a group of base stations. In general, one common signalling channel per base station would be allocated. As an example of decentralized dynamic assignment, when a base station powers-up or resets, it will scan all common signalling channels and select a free channel upon which to operate. A free channel is sometimes defined by the level of received field strength below a certain threshold. When a number of free channels exist, a number of selection strategies can be used to ensure random or uniform distribution of the common signalling channels in use. Those strategies are well known to those knowledgeable in this art and need not be discussed herein.

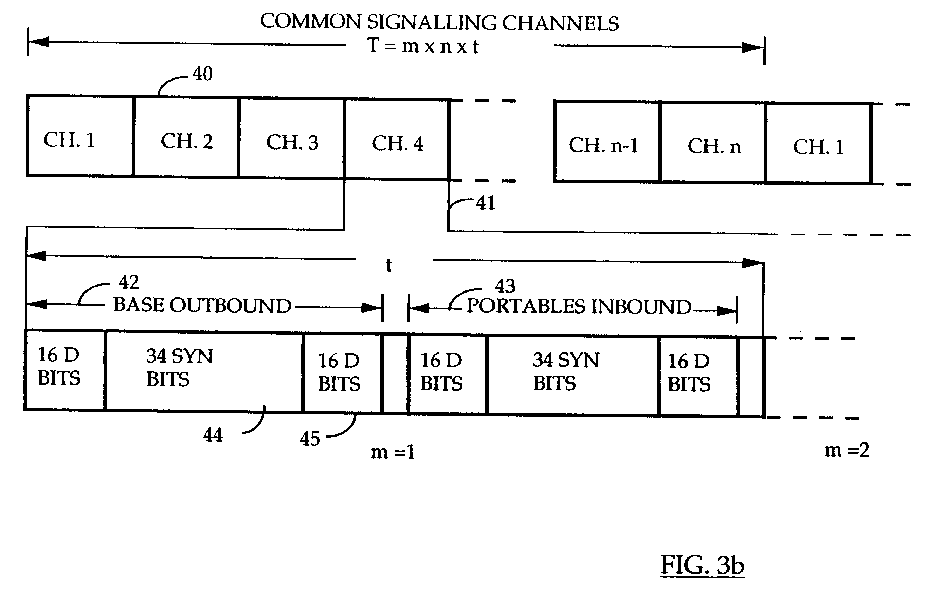

The illustration of Figure 3b, shows the frame structure for the common signalling channels of Figure 3a. The frame structure of the radio link architecture of the present invention basically comprises a number of common signalling channels operating in a TDMA mode within each RF carrier that has been allocated for that purpose. For example, each of the four RF carriers described in Figure 3a would comprise a number of common signalling channels, each channel operating within sub-frame adjacent to others, such as shown in Figure 3b. In this illustration, we have shown n channels within a time frame of T, where T = m x n x t and m is the number of duplex operations of time t within each channel. As example, if n = 8, 8 signalling channels (40) are used within one reserved RF carrier, then, for a system having 4 reserved RF carriers, 32 signalling channels would be used. As indicated above, the 8 signalling channels would be set-up in a Time Division Multiple Access (TDMA) mode, with time-division duplexing. Thus, each signalling channel operates in a sub-frame (41), and each uses one or more slots (42) of the sub-frame for handsets and the remaining slots (43) of the sub-frame for in-bound communication between the portable handsets and the base stations. In the above example, each of the four RF carriers reserved for signalling channels contain 8 TDMA sub-frames on a 16 ms. frame. Thus, eight duplex common signalling channels occupy the equivalent time/bandwidth of one duplex traffic channels. With m = 1, the first half of the sub-frame of the channel is used in broadcast mode outbound and the second half is used for in-bound transmissions from the portable handset. With m = 2, the first quarter of the sub-frame would be used for outbound, the second quarter for in-bound, the third quarter for outbound again and the last quarter for in-bound communication. The in-bound channel is shared by all portables in the cell. The in-bound channel can be random-contention multiple access channel such as described in our co-pending European application entitled "Multiple access protocol" and having Publication number EP-A-0462572, that application being based on US application US-A-5166929 filed June 18, 1990. The random contention multiple access format may comprise slotted ALOHA with reservation format for in-bound communications from the handsets. The channels can contain synchronization data (44) and D-channel type data (45). The synchronization bits would contain various words which indicate the status of the channel and are also used to gain bit and burst synchronization. The D-channel is used for messaging purposes. This channel may also be used to indicate the status of the channel.

## Claims

1. A method of operating a wireless communication system having at least two base stations , each operating in a separate cell and each communicating with a plurality of subscriber terminals over a plurality of RF carriers, characterised in that the method comprises:
allocating a first group of said plurality of RF carriers for use as traffic channels (33) between a base station (11) and subscriber terminal (13a, 13b), each RF carrier in said first group operating on a separate frequency, each RF carrier being comprised of one full-duplex traffic channel operating within a common time frame T comprised of z full-duplex time slots operating throughout the time frame T;
allocating a second group of said plurality of RF carriers (32a, 32b, 32c, 32d) for use as common signalling channels, each RF carrier in said second group being comprised of n full-duplex common signalling channels operating in time division multiple access mode within said common time frame T, each full-duplex common signalling channel operating in a sub-frame of time T/n, each sub-frame being comprised of z/n full-duplex time slots, wherein z, n and z/n are whole numbers with z greater than or equal to n;
assigning a first one of said common signalling channels to a first base station and a second one of said common signalling channels to a second base station such that subscriber terminals located in the cell of the first and second base stations can register and set-up calls using the first and second common signalling channels, respectively;
exchanging signalling signals between the first base station and subscriber terminals within the cell of the first base station via the first assigned one of the common signalling channels; and
exchanging signalling signals between the second base station and subscriber terminals within the cell of the second base station via the second assigned one of the common signalling channels,such that registration and call set-up can be performed.

2. A method as defined in claim 1, characterised in that each full-duplex time slot used with said traffic channels of said first group and said common signalling channels of said second group is comprised of a first burst used for outbound transmission from said first and second base stations and a second burst used for in-bound transmission from each of said subscriber terminals located in the cell of the first and second base stations.

3. A method as defined in claim 2, characterised in that signalling signals between said first and second base stations and subscriber terminals located in the cell of the first and second base stations, are exchanged by:
broadcasting each of said first burst used as an outbound channel on said first and second assigned one of the common signalling channels from said first and second base stations, respectively to subscriber terminals located in the cell of first and second base stations, respectively; and
receiving, at said first and second base stations, said second burst for each full-duplex time slot used as an in-bound channel by all subscriber terminals located in the cell of the first and second base stations, respectively.

4. A method as defined in claim 3, characterised in that a random contention multiple access protocol is utilized for each of said second burst on said in-bound channel of said first and second assigned one of the common signalling channels.

5. A method as defined in claim 4, characterised in that said protocol comprises slotted ALOHA with reservation format.

6. A method as defined in claim 2, characterised in that signalling signals between each of said first and second base stations and one subscriber terminal located in the cell of the first and second base stations, respectively, are exchanged by:
transmitting each of said first burst used as an outbound channel from each of said first and second base stations to said one subscriber terminal located in the cell of the first and second base stations on said first and second assigned one of the common signalling channels, respectively; and
receiving, at said first and second base station, said second burst used as an in-bound channel by said one subscriber terminal located in the cell of the first and second base stations, respectively.

7. A wireless communication system having a number of base stations (11) each being operable in a separate cell for communicating with a plurality of subscriber terminals (13a, 13b) over a plurality of RF carriers, characterised in that
each base station (11) is operable with a first group of RF carriers allocated for use as traffic channels (33) for communicating with subscriber terminals (13a, 13b) located in its cell, each RF carrier in said first group being of a separate frequency, each RF carrier being comprised of one full-duplex traffic channel operating within a common time frame T comprised of z full-duplex time slots operating over the entire frame; and
each base station is operable with a common signalling channel selected from a second group (32a, 32b, 32c, 32d) of said plurality of RF carriers allocated for use as common signalling channels for registering and setting-up calls with a subscriber terminal in its cell, each RF carrier in said second group being comprised of n full-duplex common signalling channels operating in time division multiple access mode within said common time frame T, each full-duplex common signalling channel operating in a sub-frame of time T/n, each sub-frame being comprised of z/n full-duplex time slots, wherein z, n and z/n are whole numbers with z greater than or equal to n.

## Patentansprüche

1. Verfahren zum Betrieb eines drahtlosen Kommunikationssystems mit zumindestens zwei Basisstationen, die jeweils in einer getrennten Zelle arbeiten und jeweils mit einer Vielzahl von Teilnehmer-Endgeräten über eine Vielzahl von Hochfrequenzträgern kommunizieren,
dadurch gekennzeichnet, daß das Verfahren folgende Schritte umfaßt:
Zuordnung einer ersten Gruppe der Vielzahl von Hochfrequenzträgern zur Verwendung als Verkehrskanäle (33) zwischen einer Basisstation (11) und einem Teilnehmer-Endgerät (13a,13b), wobei jeder Hochfrequenzträger in der ersten Gruppe auf einer getrennten Frequenz arbeitet und jeder Hochfrequenzträger aus einem Vollduplex-Verkehrskanal besteht, der in einem gemeinsamen Zeitrahmen T arbeitet, der z Vollduplex-Zeitschlitze umfaßt, die über den gesamten Zeitrahmen T arbeiten,
Zuordnung einer zweiten Gruppe der Vielzahl von Hochfrequenzträgern (32a,32b,32c,32d) zur Verwendung als gemeinsame Signalisierungskanäle, wobei jeder Hochfrequenzträger in der zweiten Gruppe aus n gemeinsamen Vollduplex-Signalisierungskanälen besteht, die in einer Zeitvielfachzugriffsbetriebsart in dem gemeinsamen Zeitrahmen T arbeiten, wobei jeder gemeinsame Vollduplex-Signalisierungskanal in einem Teilrahmen mit einer Zeit T/n arbeitet und jeder Teilrahmen aus z/n Vollduplex-Zeitschlitzen besteht, worin z, n und z/n ganze Zahlen sind und z größer oder gleich n ist,
Zuteilen eines ersten der gemeinsamen Signalisierungskanäle an eine erste Basisstation und eines zweiten der gemeinsamen Signalisierungskanäle an eine zweite Basisstation derart, daß in der Zelle der ersten bzw. zweiten Basisstation befindliche Teilnehmer-Endgeräte unter Verwendung des ersten bzw. zweiten gemeinsamen Signalisierungskanals eine Registrierung und einen Verbindungsaufbau durchführen können,
Austauschen von Signalisierungssignalen zwischen der ersten Basisstation und Teilnehmer-Endgeräten innerhalb der Zelle der ersten Basisstation über den ersten zugeteilten Signalisierungskanal der gemeinsamen Signalisierungskanäle, und
Austauschen von Signalisierungssignalen zwischen der zweiten Basisstation und Teilnehmer-Endgeräten innerhalb der Zelle der zweiten Basisstation über den zweiten zugeteilten Signalisierungskanal der gemeinsamen Signalisierungskanäle derart, daß eine Registrierung und ein Verbindungsaufbau ausgeführt werden kann.

2. Verfahren nach Anspruch 1,
dadurch gekennzeichnet, daß jeder Vollduplex-Zeitschlitz, der mit den Verkehrskanälen der ersten Gruppe und den gemeinsamen Signalisierungskanälen der zweiten Gruppe verwendet wird, aus einem ersten, für eine abgehende Übertragung von den ersten und zweiten Basisstationen verwendeten Datenblock und einem zweiten Datenblock besteht, der für ankommende Übertragung von jedem der Teilnehmer-Endgeräte verwendet wird, die sich in der Zelle der ersten und zweiten Basisstationen befinden.

3. Verfahren nach Anspruch 2,
dadurch gekennzeichnet, daß die Signalisierungskanäle zwischen den ersten und zweiten Basisstationen und den Teilnehmer-Endgeräten, die sich in der Zelle der ersten und zweiten Basisstationen befinden, dadurch ausgetauscht werden,
daß eine Punkt-zu-Mehrpunkt-Aussendung jedes der ersten, als abgehender Kanal verwendeten Datenblöcke auf die ersten und zweiten zugeteilten der gemeinsamen Signalisierungskanäle in der ersten bzw. zweiten Basisstation an Teilnehmer-Endgeräte durchgeführt wird, die sich in der Zelle der ersten bzw. zweiten Basisstation befinden, und
daß der zweite Datenblock für jeden Vollduplex-Zeitschlitz, der als ankommender Kanal von allen Teilnehmer-Endgeräten verwendet wird, die sich in der Zelle der ersten bzw. zweiten Basisstation befinden, an den ersten bzw. zweiten Basisstationen empfangen wird.

4. Verfahren nach Anspruch 3,
dadurch gekennzeichnet, daß ein mit zufälligem Anforderungsbetrieb und mehrfachem Zugriff arbeitendes Protokoll für jeden der zweiten Datenblöcke in dem ankommenden Kanal der ersten und zweiten zugeteilten Signalisierungskanäle der gemeinsamen Signalisierungskanäle verwendet wird.

5. Verfahren nach Anspruch 4,
dadurch gekennzeichnet, daß das Protokoll ein Zeitschlitz-ALOHA mit einem Reservierungsformat umfaßt.

6. Verfahren nach Anspruch 2,
dadurch gekennzeichnet, daß die Signalisierungssignale zwischen jeder der ersten und zweiten Basisstationen und einem Teilnehmer-Endgerät, das sich in der Zelle der ersten bzw. zweiten Basisstation befindet, dadurch ausgetauscht werden, daß
jeder der ersten Datenblöcke, die als abgehender Kanal von jeder der ersten und zweiten Basisstationen an das eine Teilnehmer-Endgerät verwendet werden, das sich in der Zelle der ersten und zweiten Basisstationen befindet, auf den ersten bzw. den zweiten zugeteilten Signalisierungskanal der gemeinsamen Signalisierungskanäle ausgesandt wird, und
an der ersten und der zweiten Basisstation der zweite Datenblock empfangen wird, der als ankommender Kanal von dem einen Teilnehmer-Endgerät verwendet wird, das sich in der Zelle der ersten bzw. zweiten Basisstation befindet.

7. Drahtloses Kommunikationssystem mit einer Anzahl von Basisstationen (11), die jeweils in einer getrennten Zelle betreibbar sind, um eine Kommunikation mit einer Vielzahl von Teilnehmer-Endgeräten (13a,13b) über eine Vielzahl von Hochfrequenzträgern durchzuführen,
dadurch gekennzeichnet, daß
jede Basisstation (11) in einer ersten Gruppe von Hochfrequenzträgern betreibbar ist, die zur Verwendung als Verkehrskanäle (33) zugeordnet sind, um mit Teilnehmer-Endgeräten (13a,13b) zu kommunizieren, die sich in ihrer Zelle befinden, wobei jeder Hochfrequenzträger in der ersten Gruppe eine getrennte Frequenz aufweist und jeder Hochfrequenzträger aus einem Vollduplex-Verkehrskanal besteht, der in einem gemeinsamen Zeitrahmen T arbeitet, der aus z Vollduplex-Zeitschlitzen besteht, die über den gesamten Rahmen arbeiten, und
jede Basisstation mit einem gemeinsamen Signalisierungskanal betreibbar ist, der aus einer zweiten Gruppe (32a,32b, 32c,32d) der Vielzahl von Hochfrequenzträgern ausgewählt ist, die zur Verwendung als gemeinsame Signalisierungskanäle zur Registrierung und zum Verbindungsaufbau mit einem Teilnehmer-Endgerät in ihrer Zelle betreibbar ist, wobei jeder Hochfrequenzträger in der zweiten Gruppe aus n gemeinsamen Vollduplex-Signalisierungskanälen besteht, die in der Zeitvielfachzugriffs-Betriebsart in dem gemeinsamen Zeitrahmen T arbeiten, wobei jeder gemeinsame Vollduplex-Signalisierungskanal in einem Teilrahmen mit einer Zeit T/n arbeitet und jeder Teilrahmen aus z/n Vollduplex-Zeitschlitzen besteht, worin z, n und z/n ganze Zahlen sind und z größer oder gleich n ist.

## Revendications

1. Procédé de mise en oeuvre d'un système de communications sans fil ayant au moins deux stations de base travaillant chacune dans une cellule séparée et communiquant avec plusieurs terminaux d'abonné par plusieurs porteuses à haute fréquence, caractérisé en ce qu'il comprend :
l'affectation d'un premier groupe des porteuses à haute fréquence afin qu'elles soient utilisées comme canaux de trafic (33) entre une station de base (11) et un terminal d'abonné (13a, 13b), chaque porteuse à haute fréquence du premier groupe travaillant à une fréquence séparée, chaque porteuse à haute fréquence étant formée par un canal de trafic en duplex intégral travaillant dans un bloc temporel commun T constitué de z tranches temporelles en duplex intégral dans tout le bloc T de temps,
l'affectation d'un second groupe des porteuses à haute fréquence (32a, 32b, 32c, 32d) afin qu'elles soient utilisées comme canaux communs de signalisation, chaque porteuse à haute fréquence du second groupe étant formée de n canaux communs de signalisation en duplex intégral travaillant en mode d'accès multiple à multiplexage temporel dans le bloc commun T de temps, chaque canal commun de signalisation en duplex intégral travaillant dans un sous-bloc de temps T/n, chaque sous-bloc étant composé de z/n tranches temporelles en duplex intégral, z, n et z/n étant des nombres entiers, z étant supérieur ou égal à n,
l'attribution d'un premier des canaux communs de signalisation à une première station de base et d'un second des canaux communs de signalisation à une seconde station de base, afin que les terminaux d'abonné placés dans la cellule de la première et de la seconde station de base puissent enregistrer et établir des appels à l'aide des premier et second canaux communs de signalisation, respectivement,
l'échange de signaux de signalisation entre la première station de base et les terminaux d'abonné contenus dans la cellule de la première station de base par l'intermédiaire du premier canal attribué parmi les canaux communs de signalisation, et
l'échange de signaux de signalisation entre la seconde station de base et les terminaux d'abonné dans la cellule de la seconde station de base par l'intermédiaire du second canal attribué dans les canaux communs de signalisation, si bien que l'enregistrement et l'établissement d'appels peuvent être effectués.

2. Procédé selon la revendication 1, caractérisé en ce que chaque tranche temporelle en duplex intégral dans les canaux de trafic du premier groupe et les canaux communs de signalisation du second groupe comprend une première salve utilisée pour les transmissions sortant de la première et de la seconde station de base et une seconde salve utilisée pour la transmission entrante pour chacun des terminaux d'abonné placés dans la cellule des première et seconde stations de base.

3. Procédé selon la revendication 2, caractérisé en ce que les signaux de signalisation placés entre la première et la seconde station de base et les terminaux d'abonné placés dans la cellule de la première et de la seconde station de base sont échangés par les opérations suivantes :
l'émission de chaque première salve utilisée comme canal sortant par le premier et le second canal attribués dans les canaux communs de signalisation à partir de la première et de la seconde station de base respectivement vers les terminaux d'abonné placés dans la cellule de la première et de la seconde station de base respectivement, et
la réception, par la première et la seconde station de base, de la seconde salve pour chaque tranche temporelle en duplex intégral sous forme d'un canal entrant par tous les terminaux d'abonné placés dans la cellule de la première et de la seconde station de base respectivement.

4. Procédé selon la revendication 3, caractérisé en ce qu'un protocole à accès multiple avec contention aléatoire est utilisé pour chaque seconde salve du canal entrant des premier et second canaux attribués parmi les canaux communs de signalisation.

5. Procédé selon la revendication 4, caractérisé en ce que le protocole est du type ALOHA à tranches avec un format de réservation.

6. Procédé selon la revendication 2, caractérisé en ce que les signaux de signalisation échangés entre chacune des première et seconde stations de base et un terminal d'abonné placé dans la cellule de la première et de la seconde station de base respectivement sont échangés par :
transmission de chaque première salve utilisée comme canal sortant à partir de chaque station parmi les premières et seconde stations de base vers un terminal d'abonné placé dans la cellule de la première et de la seconde station de base dans le premier ou second canal attribué parmi les canaux communs de signalisation respectivement, et
réception, à la première et à la seconde station de base, de la seconde salve utilisée comme canal reçu par le terminal d'abonné placé dans la cellule de la première et de la seconde station de base respectivement.

7. Ensemble de communications sans fil ayant un certain nombre de stations de base (11) qui peuvent travailler chacune dans une cellule séparée pour communiquer avec plusieurs terminaux d'abonné (13a, 13b) sur plusieurs porteuses à haute fréquence, caractérisé en ce que :
chaque station de base (11) peut travailler avec un premier groupe de porteuses à haute fréquence affectées pour être utilisées comme canaux de trafic (33) pour les communications avec les terminaux d'abonné (13a, 13b) placés dans la cellule, chaque porteuse à haute fréquence du premier groupe étant à une fréquence séparée, chaque porteuse à haute fréquence étant formée d'un canal de trafic en duplex intégral travaillant avec un bloc commun de temps T constitué de z tranches temporelles en duplex intégral travaillant dans tout le bloc, et
chaque station de base peut travailler avec un canal commun de signalisation choisi dans un second groupe (32a, 32b, 32c, 32d) des diverses porteuses à haute fréquence affectées pour être utilisées comme canaux communs de signalisation pour l'enregistrement et l'établissement des appels échangés avec un terminal d'abonné dans une cellule, chaque porteuse à haute fréquence du second groupe étant composée de n canaux communs de signalisation en duplex intégral travaillant en mode d'accès multiple multiplexé temporellement dans le bloc commun de temps T, chaque canal commun de signalisation en duplex intégral travaillant dans un sous-bloc de temps T/n, chaque sous-bloc étant constitué de z/n tranches temporelles en duplex intégral, z, n et z/n étant des nombres entiers, z étant supérieur ou égal à n.
